# EUROPEAN PATENT SPECIFICATION

(11) **EP 3 225 894 B1**
(45) Date of publication and mention of the grant of the patent: **20.05.2020**
(21) Application number: 17172097.2
(22) Date of filing: 30.03.2015
(51) Int. Cl.: F16L 33/207, B21D 17/02, B21D 39/04

(54) **BUSHING FOR THE CONNECTION OF TWO TUBULAR ELEMENTS**
BUCHSE ZUM VERBINDEN ZWEIER ROHRFÖRMIGER ELEMENTE
DOUILLE POUR LE RACCORDEMENT DE DEUX ÉLÉMENTS TUBULAIRES

(30) Priority: 02.04.2014 IT BO20140186
(43) Date of publication of application: 04.10.2017
(62) Divisional of application: 15721319.0
(73) Proprietor: I.M.M. Hydraulics S.p.A., 66041 Atessa (IT)
(72) Inventor: VIZZARRI, Domenico, 66041 ATESSA (IT)
(74) Representative: Manconi, Stefano

(56) References cited:
- US-A- 5 267 758
- US-A- 5 317 799
- US-A1- 2010 140 926

## Description

### TECHNICAL FIELD

The present invention relates to a bushing for the connection of two tubular elements.

The application of the present invention is particularly advantageous when connecting a flexible tubular element to a rigid tubular element, to which the following disclosure will explicitly refer without however loosing in generality.

### BACKGROUND ART

In order to connect a flexible tubular element and a rigid tubular element together, it is known to produce a bushing comprising an outer coupling, which is cup-shaped, and is delimited by an annular bottom wall hooked to the rigid tubular element.

The bushing extends around an end portion of the rigid tubular element, and further comprises an inner sleeve, which is axially locked inside the outer coupling, and has a plurality of annular teeth radially projecting towards the inside from an inner surface of the inner sleeve, and are arranged in sequence along a longitudinal axis of the bushing.

The inner sleeve generally comprises at least two cylindrical sectors connected together or it is produced from a flat blank bent into a substantially cylindrical configuration.

Therefore, the inner sleeve has at least one wall interruption obtained at the end faces of the above-mentioned cylindrical sectors, in one case, and at the end faces of the above-mentioned flat blank bent in its cylindrical configuration, in the other case.

Once an end portion of the flexible tubular element has been inserted between the bushing and the rigid tubular element, the bushing is radially deformed so as to allow the annular teeth of the inner sleeve to penetrate the flexible tubular element and lock the flexible tubular element on the rigid tubular element.

Known bushings for the connection of two tubular elements of the type described above have certain drawbacks mainly resulting from the fact that when the radial tightening force exerted by the bushing on the flexible tubular element exceeds a predetermined threshold value, the flexible tubular element is damaged by the bushing itself.

Known bushings for the connection of two tubular elements of the type described above also have the further drawback consisting in that, due to the mentioned wall interruption in the inner sleeve, the radial pressure exerted by the flexible tubular element on the bushing is entirely absorbed by the outer coupling, which thus needs to have relatively high thicknesses and therefore is relatively costly.

US2010140926 A1 discloses a bushing comprising a unitary one-piece radially crushable ferrule and a cylindrical insert for gripping a hose end portion.

US5317799 discloses a similar bushing. An insert is formed into two semi-circular members or as a unitary circular split annular member.

### DISCLOSURE OF INVENTION

It is the object of the present invention to provide a bushing for the connection of two tubular elements, which is exempt from the above-described drawbacks and is simple and cost-effective to be implemented.

According to the present invention, there is provided a bushing for the connection of two tubular elements, as claimed in claims 1 to 8.

### BRIEF DESCRIPTION OF THE DRAWINGS

The present invention will now be described with reference to the accompanying drawings, which show a nonlimiting embodiment thereof, in which:
figure 1 is a longitudinal section of a preferred embodiment of the bushing of the present invention;
figure 2 diagrammatically shows the method for the production of the bushing in figure 1; and
figure 3 is a diagrammatic side view, with sectional parts, of two tubular elements connected to each other by means of the bushing in figure 1.

### BEST MODE FOR CARRYING OUT THE INVENTION

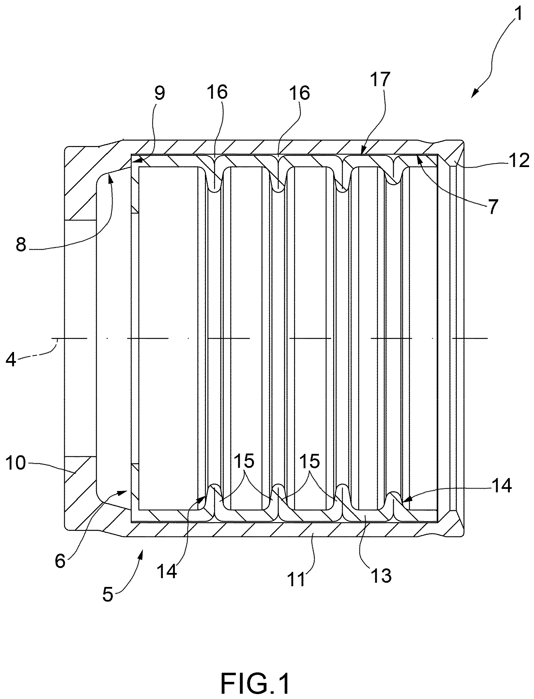

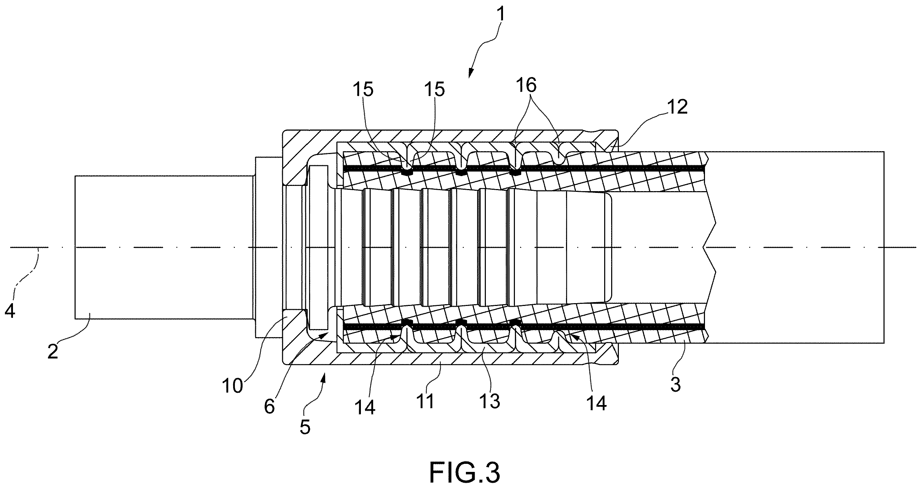

With reference to figures 1 and 3, numeral 1 indicates a bushing as a whole for connecting together two tubular elements 2, 3.

Bushing 1 has a longitudinal axis 4, is cup-shaped, and comprises an outer coupling 5 and an inner sleeve 6 mounted in coupling 5.

Coupling 5 extends around axis 4 and comprises an enlarged portion 7 and a narrow portion 8 which are connected to each other by an annular abutment 9 which is substantially perpendicular to axis 4.

Portion 8 is delimited by an annular bottom wall 10 which is substantially perpendicular to axis 4, and portion 7 is delimited by a lateral wall 11 which is substantially coaxial to axis 4.

Sleeve 6 extends around axis 4, and is axially locked inside coupling 5 between abutment 9 and an annular end flange 12 radially projecting towards the inside from the lateral wall 11 of coupling 5.

Sleeve 6 is obtained in a single piece, and is delimited by a lateral wall 13, which is coaxial to axis 4, is continuous, and has no wall interruptions and openings obtained through wall 13, in particular parallel to axis 4.

In other words, the wall 13 of sleeve 6 is complete and has no wall interruptions and openings which are typical of a sleeve produced either in several parts or from a flat blank bent in cylindrical shape.

Sleeve 6 has a plurality of annular teeth 14, which project towards the inside of bushing 1 relative to wall 13, and are aligned to one another along axis 4.

Each tooth 14 is, tangentially, a continuous annular tooth without interruptions, and is defined by two annular lateral sides 15 obtained, each, from a respective bending of wall 13.

The two sides 15 of each tooth 14 are arranged substantially in contact with each other and are connected together at a minimum diameter of tooth 14.

Sleeve 6 also has a plurality of annular recesses 16, which are obtained at an outer surface 17 of wall 13 and their number equals the number of teeth 14.

Each recess 16 is radially aligned to a corresponding tooth 14 and is obtained at the joining areas between the lateral sides 15 of the corresponding tooth 14 and wall 13.

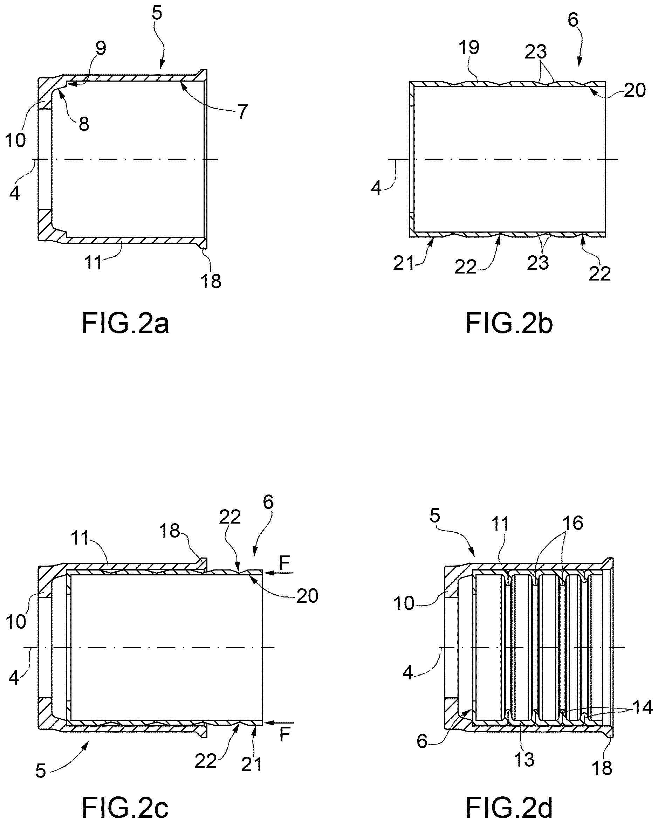

As shown in figure 2a, coupling 5 has, in an initial configuration thereof, an annular end flange 18 radially projecting towards the outside from wall 11.

With reference to figure 2b, sleeve 6 has, in an initial configuration thereof, a length, measured parallel to axis 4, longer than a length of the enlarged portion 7 of coupling 5, which is also measured parallel to axis 4.

Sleeve 6 is obtained in a single piece and has, in an initial configuration thereof, a lateral wall 19, which is continuous and has no wall interruptions and openings obtained through wall 13 parallel to axis 4.

In other words, the wall 19 of sleeve 6 is complete and has no wall interruptions and openings which are typical of a sleeve produced either in several parts or from a flat blank bent in cylindrical shape.

Wall 19 is delimited by a smooth inner surface 20 and by a shaped outer surface 21 provided with a plurality of annular recesses 22.

The recesses 22 extend around axis 4, are aligned to one another along axis 4, and are delimited, each, by two respective lateral sides 23 which substantially have the shape of a truncated cone with opposite concavities.

Bushing 1 is produced by inserting sleeve 6 inside the enlarged portion 7 of coupling 5 so that sleeve 6 is arranged in contact with abutment 9 and projects towards the outside of coupling 5 (figure 2c).

Sleeve 6 is then subjected to an axial force F applied parallel to axis 4 at a free end of sleeve 6 projecting towards the outside of coupling 5 (figure 2c).

Sleeve 6 is deformed, by means of force F, from the initial configuration thereof into a final configuration, in which sleeve 6 is entirely accommodated inside the coupling 5 itself (figure 2d).

The deformation of sleeve 6 results in the formation of lateral wall 13, teeth 14, and recesses 16.

Finally, flange 18 is radially deformed to form flange 12 and to lock sleeve 6 axially inside coupling 5 (figure 1) .

With regard to the above explanation, it is worth noting that coupling 5 and sleeve 6 are preferably, but not necessarily, produced by means of moulding.

As shown in figure 3, bushing 1 is used to connect the two tubular elements 2, 3 to each other, element 2 being a rigid tubular element and element 3 being a flexible tubular element.

Bushing 1 is fitted and axially locked onto element 2, while element 3 is fitted onto element 2 and is inserted between element 2 and bushing 1.

Once element 3 has been inserted between bushing 1 and element 2, bushing 1 is radially deformed to allow the teeth 14 to engage element 3 and to lock the two elements 2 and 3 to each other.

Bushing 1 has certain advantages mainly resulting from the fact that when the radial tightening force exerted by bushing 1 on element 3 exceeds a predetermined threshold value, the presence of the recesses 16 allows bushing 1 to absorb the overload which would otherwise act on element 3, thus preventing it from breaking.

Since sleeve 6 is complete and has no wall interruptions and/or openings, the radial pressure exerted by element 3 on bushing 1 is absorbed partly by sleeve 6 and partly by coupling 5, which thus has relatively small thicknesses, therefore being relatively cost-effective.

## Claims

1. A bushing for the connection of two tubular elements (2, 3), the bushing having a longitudinal axis (4) and comprising an outer coupling (5), which is cup-shaped, and is delimited by an annular bottom wall (10); and an inner sleeve (6), which is obtained in a single piece and which is axially locked inside the outer coupling (5), is delimited by a lateral wall (13) extending around said longitudinal axis (4), and has a plurality of annular teeth (14) projecting towards the inside of the bushing relative to the lateral wall (13) ;
**characterised in that**
the inner sleeve (6) also has a plurality of annular recesses (16), which are obtained at an outer surface (17) of the lateral wall (13) itself; and the lateral wall (13) is continuous and without wall interruptions and/or openings; each annular tooth (14) being defined by two annular lateral sides (15), which are arranged substantially in contact with each other, and are connected together at a minimum diameter of the annular tooth (14) itself.

2. A bushing according to claim 1, wherein the number of annular recesses (16) equals the number of annular teeth (14) .

3. A bushing according to claim 2, wherein each annular recess (16) is radially aligned with a corresponding annular tooth (14).

4. A bushing according to any of the previous claims, wherein each annular tooth (14) is, tangentially, a continuous annular tooth without interruptions.

5. A bushing according to any of the previous claims, wherein each annular recess (16) is obtained at the joining areas between the lateral sides (15) of the corresponding annular tooth (14) and the lateral wall (13).

6. A bushing according to any of the previous claims, wherein the outer coupling (5) has two abutments (9, 12) obtained transversely to said longitudinal axis (4), so as to axially lock the inner sleeve (6) inside the outer coupling (5) itself.

## Patentansprüche

1. Buchse für die Verbindung von zwei rohrförmigen Elementen (2, 3), wobei die Buchse eine Längsachse (4) aufweist und umfasst eine äußere Kupplung (5), welche schalenförmig ist und durch eine ringförmige Bodenwand (10) begrenzt ist, und eine Innenhülse (6), die in einem Stück hergestellt ist und die axial innenseitig der äußeren Kupplung (5) blockiert ist, durch eine sich um die Längsachse (4) erstreckende Seitenwand (13) begrenzt ist und eine Mehrzahl von ringförmigen Zähnen (14) aufweist, die in Bezug zur Seitenwand (13) in Richtung der Innenseite der Buchse vorstehen;
**dadurch gekennzeichnet, dass**
die Innenhülse (6) auch eine Mehrzahl von ringförmigen Ausnehmungen (16) hat, die an einer Außenfläche (17) der Seitenwand (13) ausgebildet sind; und wobei die Seitenwand (13) durchgehend und ohne Wandunterbrechungen und/oder Öffnungen ist; wobei jeder ringförmige Zahn (14) durch zwei ringförmige Seitenwände (15) gebildet wird, welche im Wesentlichen in Kontakt miteinander angeordnet sind und an einem Minimaldurchmesser des ringförmigen Zahns (14) miteinander verbunden sind.

2. Buchse nach Anspruch 1, in welcher die Anzahl der ringförmigen Ausnehmungen (16) gleich der Anzahl ringförmiger Zähne (14) ist.

3. Buchse nach Anspruch 2, in welcher jede ringförmige Ausnehmung (16) mit einem korrespondierenden ringförmigen Zahn (14) radial ausgerichtet ist.

4. Buchse nach einem der vorhergehenden Ansprüche, in welcher jeder ringförmige Zahn (14) tangential ein fortlaufender ringförmiger Zahn ohne Unterbrechungen ist.

5. Buchse nach einem der vorhergehenden Ansprüche, in welcher jede ringförmige Ausnehmung (16) an den Verbindungsbereichen zwischen den Seitenwänden (15) des korrespondierenden ringförmigen Zahns (14) und der Seitenwand (13) ausgebildet ist.

6. Buchse nach einem der vorhergehenden Ansprüche, in welcher die Außenkupplung (5) zwei Anschläge (9, 12) hat, die quer zur Längsachse (4) ausgebildet sind, um so die Innenhülse (6) innerhalb der Außenkupplung (5) axial zu blockieren.

## Revendications

1. Douille pour la connexion de deux éléments tubulaires (2, 3), la douille ayant un axe longitudinal (4) et comprenant un élément de couplage externe (5), qui est en forme de coupe, et est délimité par une paroi de fond annulaire (10) ; et un manchon interne (6), qui est obtenu en tant que pièce unique et qui est bloqué axialement à l'intérieur de l'élément de couplage externe (5), est délimité par une paroi latérale (13) s'étendant autour dudit axe longitudinal (4), et a une pluralité de dents annulaires (14) faisant saillie vers l'intérieur de la douille par rapport à la paroi latérale (13) ;
**caractérisée en ce que** le manchon interne (6) a également une pluralité d'évidements annulaires (16), qui sont obtenus au niveau d'une surface externe (17) de la paroi latérale (13) elle-même ; et
la paroi latérale (13) est continue et sans interruptions et/ou ouvertures de la paroi ;
chaque dent annulaire (14) étant définie par deux côtés latéraux annulaires (15), qui sont disposés sensiblement en contact l'un avec l'autre, et sont reliés ensemble à un diamètre minimum de la dent annulaire (14) elle-même.

2. Douille selon la revendication 1, dans laquelle le nombre d'évidements annulaires (16) est égal au nombre de dents annulaires (14).

3. Douille selon la revendication 2, dans laquelle chaque évidement annulaire (16) est aligné radialement avec une dent annulaire correspondante (14).

4. Douille selon l'une quelconque des revendications précédentes, dans laquelle chaque dent annulaire (14) est, tangentiellement, une dent annulaire continue sans interruption.

5. Douille selon l'une quelconque des revendications précédentes, dans laquelle chaque évidement annulaire (16) est obtenu au niveau des zones de jonction entre les côtés latéraux (15) de la dent annulaire correspondante (14) et la paroi latérale (13).

6. Douille selon l'une quelconque des revendications précédentes, dans laquelle l'élément de couplage externe (5) a deux butées (9, 12) obtenues transversalement audit axe longitudinal (4), de manière à bloquer axialement le manchon interne (6) à l'intérieur de l'élément de couplage externe (5) lui-même.
